# FASCICULE DE BREVET EUROPEEN

(11) **EP 3 286 138 B1**
(45) Date de publication et mention de la délivrance du brevet: **10.04.2019**
(21) Numéro de dépôt: 16783467.0
(22) Date de dépôt: 22.04.2016
(51) Int. Cl.: C01F 11/22, C01B 33/12

(54) **PROCESSUS DE PREPARATION DU FLUORURE DE CALCIUM A PARTIR DE L'ACIDE FLUOSILICIQUE**
VERFAHREN ZUR HERSTELLUNG VON CALCIUMFLUORID AUS FLUORKIESELSÄURE
PROCESS FOR PREPARING CALCIUM FLUORIDE FROM FLUOSILICIC ACID

(30) Priorité: 22.04.2015 EP 15164685
(43) Date de publication de la demande: 28.02.2018
(73) Titulaire: OCP SA, Casablanca 20200 (MA)
(72) Inventeur: SAMRANE, Kamal, Casablanca 20200 (MA); KOSSIR, Abdelaali, El Jadida 24040 (MA)
(74) Mandataire: Regimbeau
(86) Numéro de dépôt international: PCT/MA2016/000009
(87) Numéro de publication internationale: WO 2016/171535

(56) Documents cités:
- EP-A1- 0 684 067
- CN-A- 103 073 040
- US-A- 3 907 978
- US-A- 4 915 705

## Description

### DOMAINE DE L'INVENTION

L'invention concerne un procédé de préparation de fluorure de calcium synthétique (CaF₂) et de la silice active à partir d'acide fluosilicique (H₂SiF₆).

### CONTEXTE DE L'INVENTION

Les roches de phosphate contiennent 2 à 4 pour cent de fluor.

Une partie du fluor de la roche de phosphate est précipitée avec du gypse, une autre partie est lessivée avec le produit d'acide phosphorique, et la partie restante, représentant environ 70% du fluor total est vaporisée dans le réacteur et l'évaporateur.

Comme les réglementations environnementales continuent de réduire les émissions de traitement chimique, les opérateurs d'usines de phosphate seront éventuellement appelés à neutraliser les matériaux de déchets de fluorure.

La plupart des usines de phosphate utilisent actuellement condenseurs barométriques de contact direct avec l'eau en recirculation du bassin de refroidissement qui est saturée avec des sels de fluorure.

La plupart de ce fluorure est autorisé à précipiter pendant que l'eau en recirculation refroidisse dans de grands systèmes de refroidissement.

Lorsque le traitement de l'eau contaminée par le fluorure est requis, les producteurs de phosphate utilisent généralement la neutralisation avec de la chaux ou du calcaire avant d'évacuer l'effluent.

Une meilleure alternative environnementale devrait utiliser des épurateurs pour éliminer les fluorures sous forme d'acide fluosilicique avant la condensation des vapeurs dans les condenseurs barométriques.

Si l'acide fluosilicique ne peut pas être utilisé tel quel, il pourrait alors être neutralisé avec plusieurs composés de calcium tels que la roche, la chaux et le calcaire de phosphate qui sont des procédés non rentables.

A l'heure actuelle, les débouchés les plus importants de l'acide fluosilicique sont la fluoruration d'eau, la fabrication du fluosilicate, le fluorure d'hydrogène et le fluorure d'aluminium qui est l'utilisation chimique la plus importante de l'acide fluosilicique dans le monde.

Dans le passé, plusieurs procédés ont été développés pour rendre possible la valorisation de l'acide fluosilicique en fluorure d'hydrogène ou en fluorure d'aluminium, cependant, aucun de ces procédés n'a été en mesure d'absorber les quantités globales d'acide fluosilicique fabriquées par les producteurs de phosphate.

Il existe donc un besoin d'autres moyens pour convertir l'acide fluosilicique en produits fluorés plus appropriés tels que le fluorure de calcium synthétique.

Le fluorure de calcium synthétique pourrait avantageusement remplacer le spath fluor, qui est le minéral de départ le plus commun pour tous les produits de fluor, en particulier lorsque l'on considère le coût très élevé du spath fluor en raison de la diminution des ressources et de la limitation de ses exportations partout dans le monde.

Par conséquent, certains procédés ont été développés pour produire du fluorure de calcium à partir d'acide fluosilicique par réaction avec du carbonate de calcium (CaCO₃) ou de l'hydroxyde de calcium Ca(OH)₂.

A cet égard, les brevets américains N° 2780521 et N° 2780523 décrivent la réaction d'acide fluosilicique dilué ayant une concentration comprise entre 2,5 et 3,8% de chaux. Selon ces brevets, si la réaction est effectuée dans une gamme de pH de 3.5 à 6.7, le fluorure de calcium CaF₂ peut être séparable sous une forme facilement filtrable du SiO₂-sol produit simultanément.

Un gros inconvénient du procédé décrit dans le brevet américain N° 2780521 réside dans le fait que l'on obtient un produit de fluorure de calcium qui contient entre 4 et 7% de SiO₂ en tant qu'impureté. Un tel matériau a peu d'aptitude à la production de fluorure d'hydrogène.

Dans le procédé décrit dans le brevet américain N° 2780523, on obtient du fluorure de calcium avec une faible teneur en SiO₂, à savoir environ 0,5% ou moins. Cela est accompli selon eux en ajoutant à l'acide fluosilicique dilué pas plus de 85% de la quantité de carbonate de calcium CaCO₃ stoechiométriquement nécessaire pour la formation de fluorure de calcium.

Après la filtration du produit obtenu, le filtrat est de nouveau traité au carbonate de calcium pour obtenir une valeur de pH comprise entre 7 et 7,3. Le produit obtenu dans cette étape constitue un mélange de fluorure de calcium et de fluosilicate de calcium qui n'est pas utilisable.

Par ailleurs, un autre inconvénient apparait dans le fait que des périodes de réaction relativement longues d'environ 30 minutes à deux heures sont nécessaires. En outre, un une faiblesse importante des deux procédés décrits ci-dessus réside dans le fait que seul un acide fluosilicique très dilué (concentration maximale de 4 à 6%) peut être utilisé. En conséquence, la production industrielle de fluorure d'hydrogène s'effectue encore aujourd'hui exclusivement à partir du spath fluor naturel qui est mis à réagir sous la forme de que l'on appelle spath de qualité acide (acids par) avec plus de 97% de fluorure de calcium CaF₂.

Par conséquent, il est nécessaire de convertir l'acide fluosilicique produit en fluorure de calcium en tant que sous-produit en quantités croissantes au cours de la production des superphosphates et d'acide phosphorique humide. En conséquence, le fluorure obtenu dans une telle forme peut être immédiatement transformé en fluorure d'hydrogène dans les installations industrielles existantes. De plus, le fluorure de calcium sera considéré comme une réserve de fluor, car il peut être stocké en toute sécurité.

Le brevet américain N° 4.031.193 propose un procédé de préparation de fluorure de calcium à partir d'acide fluosilicique, qui comprend les étapes consistant à faire réagir l'acide fluosilicique avec du carbonate de calcium, de préférence sous la forme d'une suspension aqueuse, à une valeur de pH comprise entre environ 2 et 6, de préférence entre environ 3 et 5, et en présence de sulfate et/ou des ions aluminium, ce par quoi un précipité de fluorure de calcium et de sol de silice aqueux sont formés, ensuite on sépare le précipité de fluorure de calcium du sol de silice aqueux.

Le brevet américain N° 3271107 fournit un procédé de fabrication de silice de haute qualité à partir d'acide fluosilicique par la réaction de l'acide fluosilicique avec l'hydroxyde d'ammonium dans deux étapes séparées, qui comprennent la réaction d'acide fluosilicique avec l'hydroxyde d'ammonium dans une zone réactionnelle d'une forte agitation et en ajustant les proportions des réactifs pour maintenir un pH dans l'intervalle de 6,0 à 8,0, à la suite de laquelle une suspension contenant de la silice est produite, puis faire réagir ladite suspension dans une zone de réaction sans agitation avec de l'hydroxyde d'ammonium supplémentaire en une quantité suffisante pour fournir un pH final de 8,3 à 9,0 pendant une durée d'environ 20 minutes à 120 minutes, et on sépare la silice précipitée de la suspension résultante.

Le brevet américain N° 6.224.844 propose un procédé de production de fluorure de calcium qui consiste à:
(a) mélanger l'acide phosphorique (H₃PO₄) et le H₂SiF₆ aqueux pour former un mélange de telle sorte que la concentration du H₃PO₄ est d'au moins environ 3 moles/litre,
(b) ajouter la roche de phosphate au mélange à une vitesse telle que le pH du mélange est maintenu à moins d'environ 1,0 et à une température suffisante pour former un deuxième mélange contenant du fluorure de calcium, et
(c) séparer le fluorure de calcium à partir dudit second mélange.

Les documents CN 103073040, CN 102502753 et US 4,915,705 décrivent chacun un procédé pour produire du fluorure de calcium à partir d'acide fluosilicique, comprenant les étapes suivantes:
(a) la réaction de l'acide fluosilicique avec l'hydroxyde d'ammonium ou l'ammoniac dans un premier réacteur, de manière à obtenir une première suspension épaisse; le filtrage de ladite première suspension de manière à obtenir un filtrat contenant une solution de fluorure d'ammonium;
(b) la précipitation de la solution de fluorure d'ammonium obtenue sous forme d'un filtrat à l'étape (a) avec de l'hydroxyde de calcium dans un deuxième réacteur de manière à produire une deuxième suspension contenant le fluorure de calcium et de l'hydroxyde d'ammonium; le filtrage de ladite deuxième suspension de manière à obtenir un gâteau de filtration contenant du fluorure de calcium et un filtrat contenant une solution d'hydroxyde d'ammoniaque; le lavage et le séchage dudit gâteau de filtration afin d'obtenir du fluorure de calcium et un lavage de gâteau de filtration contenant une solution d'hydroxyde d'ammonium.

Toutefois, en raison de l'utilisation de l'hydroxyde de calcium pour précipiter le fluorure de calcium, la chimie et la cinétique de la réaction ne sont pas aussi favorables pour permettre d'obtenir facilement le fluorure de calcium avec le degré de pureté et de granulométrie désiré pour le marché du spath de qualité acide (Acidspar). De plus, les pertes d'ammoniac et de fluor pendant la séparation du fluorure de calcium sont énormes en raison de la forme et taille des cristaux du fluorure de calcium. En outre, le filtrat d'hydroxyde d'ammonium, est beaucoup plus concentré sur NH₃, ce qui rend la récupération d'ammoniac très difficile et coûteuse.

### BREVE DESCRIPTION DE L'INVENTION

Un but de l'invention est de fournir un nouveau procédé de production de fluorure de calcium synthétique de qualité supérieure (min 90% de CaF₂ en poids) et moins coûteux.

L'invention concerne un procédé de préparation de fluorure de calcium synthétique (CaF₂) (min 90% de CaF₂ en poids) à partir d'acide fluosilicique, comprenant les étapes suivantes:
(a) la réaction de l'acide fluosilicique (H₂SiF₆) avec l'hydroxyde d'ammonium ou l'ammoniac dans un premier réacteur, de manière à obtenir une première suspension épaisse; le filtrage de ladite première suspension de manière à obtenir un filtrat contenant une solution de fluorure d'ammonium;
(b) la précipitation de la solution de fluorure d'ammonium obtenue sous forme d'un filtrat à l'étape (a) avec du carbonate de calcium comme une forme sèche ou sous forme d'une suspension à une concentration allant de 10 à 80% en poids dans un deuxième réacteur de manière à produire une deuxième suspension contenant le fluorure de calcium et le carbonate d'ammonium; le filtrage de ladite deuxième suspension de manière à obtenir un gâteau de filtration contenant du fluorure de calcium et un filtrat contenant une solution de carbonate d'ammoniaque; le lavage et le séchage dudit gâteau de filtration afin d'obtenir du fluorure de calcium et un gâteau de filtration de lavage contenant une solution d'hydroxyde d'ammonium;
(c) L'évolution de la majeure partie de l'ammoniac provenant du deuxième réacteur à l'étape (b) à cause de la décomposition partielle du carbonate d'ammonium sous des conditions de réacteur ensuite le lavage et le renvoi dudit ammoniac dans le premier réacteur et la collecte et le traitement par distillation et condensation des solutions de carbonate d'ammonium obtenues en tant que filtrat et gâteau de filtration de lavage dans l'étape (b) pour récupérer l'ammoniac liquide qui est recyclé vers le premier réacteur.

Afin d'améliorer la cristallisation du fluorure de calcium dans le second réacteur dans l'étape (b), une quantité de la deuxième boue allant de 10 à 70% est recyclée vers le second réacteur tandis que la quantité de la deuxième boue restante est filtrée pour récupérer le fluorure de calcium, qui est lavé et séché.

Avantageusement, à l'étape (a) la filtration de la première bouillie produit un gâteau de filtration contenant de la silice qui est une silice précipitée amorphe et ledit gâteau de silice est en outre lavé et séché.

Selon un mode de réalisation, la source de calcium utilisé est un calcaire à haute teneur en (CaCO₃).

Selon un mode de réalisation, la concentration de l'acide fluosilicique utilisée à l'étape (a) est comprise entre 5 et 40% en poids.

Selon un mode de réalisation, l'acide fluosilicique utilisée à l'étape (a) est un sous-produit d'acidulation de roche de phosphate.

Avantageusement, les conditions de réaction effectuée dans le premier réacteur dans l'étape (a) comprennent au moins un des éléments suivants:
- l'agitation du mélange;
- une température comprise entre 20 et 90°C;
- un pH allant de 5 à 11; et
- un temps de séjour compris entre 15 et 360 minutes.

Selon un mode de réalisation, le lavage du gâteau de filtration obtenu à l'étape (a) contient une solution de fluorure d'ammonium qui est recyclée vers le premier ou le second réacteur, et le filtrat obtenu dans l'étape (a) est envoyé au deuxième réacteur.

Selon un mode de réalisation, le pH de précipitation du fluorure de calcium dans l'étape (b) est dans la plage de 6 à 12 et le rapport pondéral Ca/F est supérieur à 0,5.

Avantageusement, les conditions de réaction effectuée dans le second réacteur dans l'étape (b) au moins un des éléments suivants:
- l'agitation du mélange;
- une température comprise entre 60 et 90°C; et
- un temps de séjour compris entre 30 et 60 minutes.

L'ammoniac obtenu à l'étape (c) peut être utilisé dans l'étape (a), tel quel ou en tant que solution de carbonate d'ammonium.

### BRÈVE DESCRIPTION DES DESSINS

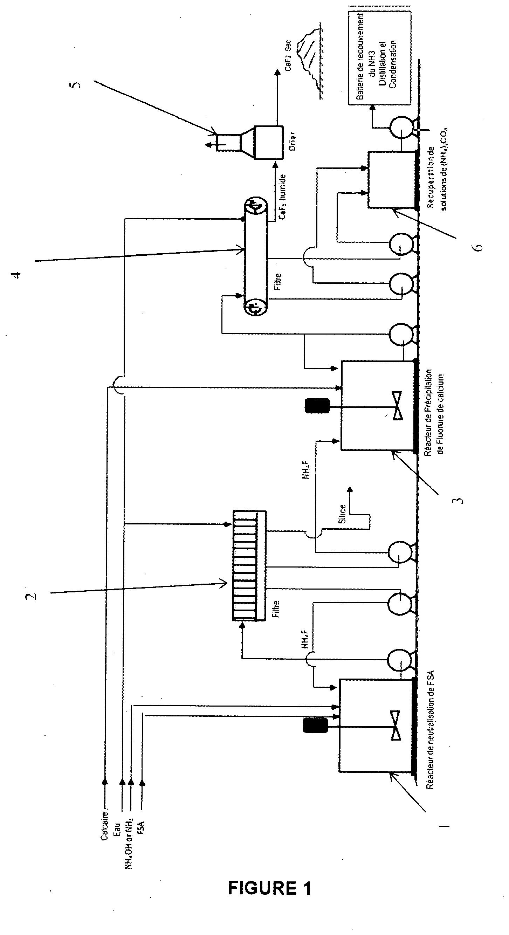

D'autres caractéristiques et avantages de l'invention apparaîtront à partir de la description détaillée suivante en relation avec les dessins annexés, dans lesquels la figure 1 illustre schématiquement une installation pour la mise en oeuvre du procédé selon l'invention.

### DESCRIPTION DETAILLEE DE L'INVENTION

La présente invention fournit un procédé de production de fluorure de calcium synthétique de qualité supérieure (min 90% de CaF₂ en poids) et de la silice active, qui est une silice précipitée amorphe à partir d'acide fluosilicique obtenu comme sous-produit d'acidulation de roche de phosphate à la suite de traitement de gaz fluoré.

Le procédé impliquant la voie d'ammoniac pour la production de CaF₂ synthétique et silice active(SiO₂) à partir d'acide fluosilicique.

Le processus comprend deux étapes principales.

L'acide fluosilicique est fourni sous forme de solution aqueuse.

La concentration en acide fluosilicique dans ladite solution aqueuse est avantageusement dans la gamme de 5 à 40% en poids.

La première étape du procédé comprend la neutralisation de l'acide fluosilicique par addition d'ammoniac sous forme de solution liquide ou gazeuse dans un réacteur.

Que ce soit l'utilisation de l'ammoniac ou une solution d'hydroxyde d'ammonium, le pH de cette solution doit être supérieur à 7, de préférence supérieur à 8, mieux encore supérieur à 9. Si une solution d'hydroxyde d'ammonium est fournie, la concentration en NH₃ dans le la solution est de préférence comprise entre 10 et 35% en poids.

Afin d'améliorer l'efficacité de la réaction, celle-ci doit être effectuée avec une agitation adéquate et/ou à une température appropriée. Par exemple, la température de la réaction peut varier de 20° à 90°C.

La réaction entre la solution d'acide fluosilicique et l'ammoniac produit une boue. Ladite boue est filtrée en utilisant un filtre à vide ayant une taille de pores de 100 µm ou plus en utilisant de préférence un filtre-presse, de manière à obtenir, d'une part, un filtrat qui comprend une solution de fluorure d'ammonium et, d'autre part, un gâteau de filtration actif qui comprend de la silice.

Les produits de la première étape du procédé sont donc du fluorure d'ammonium (NH₄F) (sous forme de liquide) et de la silice active SiO₂ (sous forme solide).

En vue d'une utilisation ultérieure de ladite silice active, cette dernière peut être lavée une fois de plus avec de l'eau fraîche, séchée à 110°C et évacuée.

La seconde étape du procédé comprend la précipitation du NH₄F en ajoutant une source de calcium qui est un calcaire à haute teneur (CaCO₃).

La source de calcium est fournie sous forme de suspension de carbonate de calcium dans une solution aqueuse. La concentration de la suspension est comprise entre 10 et 80% en poids. Dans le cas contraire, le carbonate de calcium peut être fourni sous une forme sèche.

La quantité requise de la source de calcium est choisie pour atteindre un rapport en poids Ca/F supérieur ou égal à 0,5, typiquement égal à 1 dans le mélange réactionnel. Le pH du mélange réactionnel est basique, de préférence supérieur à 8, plus préférablement supérieur à 9, et encore plus préférentiellement supérieur à 10.

Afin d'améliorer l'efficacité de la réaction qui est endothermique, la réaction peut être effectuée avec une agitation appropriée et/ou à une température appropriée. Par exemple, la température de réaction peut aller de 60° à 90° C. En particulier, contrairement à la réaction entre l'hydroxyde de calcium et le fluorure d'ammonium, qui est exothermique, la réaction entre le carbonate de calcium et le fluorure d'ammonium est endothermique. Le fait de chauffer le mélange dans le réacteur permet donc de mieux solubiliser la source de calcium, ce qui diminue le temps de réaction et l'amélioration de la forme et la taille des cristaux du fluorure de calcium.

La réaction entre le fluorure d'ammonium et le carbonate de calcium produit une boue contenant du fluorure de calcium et le carbonate d'ammonium.

Ladite boue est filtrée en utilisant un filtre à vide ayant une taille de pores de 100 µm ou plus en utilisant de préférence un filtre-presse, de manière à obtenir, d'une part, un gâteau de filtration contenant du fluorure de calcium et, d'autre part un filtrat contenant une solution de carbonate d'ammoniaque. Pour améliorer la cristallisation du fluorure de calcium, une quantité déterminée de la boue de fluorure de calcium comprise entre 10 et 70% en poids est renvoyée au réacteur tandis que le reste de la boue de fluorure de calcium est séparée par filtration à l'aide du filtre-presse pour récupérer le produit de fluorure de calcium. Grâce à ce recyclage de la boue, le taux de sursaturation du fluorure de calcium augmente dans le réacteur, ce qui augmente la croissance de la cristallisation des particules de fluorure de calcium et permet l'obtention de gros cristaux uniformes ce qui permet d'améliorer la distribution de la granulométrie des particules de fluorure de calcium.

La granulométrie du fluorure de calcium est la spécification clé pour l'utilisation fluorure de calcium synthétique fluorure comme substitut au spath de qualité acide (Acidspar).

Ensuite, le gâteau de filtration est lavé et séché de manière à obtenir du fluorure de calcium et un lavage du gâteau filtration contenant une solution de carbonate d'ammonium.

Les produits de la seconde étape du procédé sont donc du fluorure de calcium (CaF₂) (sous forme solide) et du carbonate d'ammonium ((NH₄)₂CO₃) (sous forme liquide).

En utilisant le carbonate de calcium qui est une source ultra-pure de calcium (contrairement au calcium d'hydroxyde qui contient des impuretés), le fluorure de calcium est plus facilement obtenu avec un degré de pureté très élevé.

Par conséquent, la deuxième étape du procédé produit deux solutions de carbonate d'ammonium: la première est le filtrat résultant de la filtration de la boue et la deuxième est le lavage de gâteau de filtration.

En ce qui concerne le recyclage de l'ammoniac, la majeure partie de l'ammoniac et du dioxyde de carbone se dégage du réacteur de fluorure de calcium en raison de la décomposition partielle du carbonate d'ammonium sous les conditions du réacteur et sont ensuite lavés et retournés au réacteur de silice, les deux solutions de carbonate d'ammonium sont ensuite recueillies et traitées par distillation et condensation pour récupérer l'ammoniac liquide.

Ledit ammoniac peut ainsi être recyclé dans la première étape du procédé pour neutraliser l'acide fluosilicique. Ce recyclage permet de minimiser le coût du procédé de fabrication du fluorure de calcium.

Les mécanismes de réactions sont:
- la première étape du procédé: neutralisation de l'acide fluosilicique avec du NH₃ ou du NH₄OH:

   H₂SiF₆.2H₂O+ 6 NH₄OH →6 NH₄F + SiO₂ ↓+ 6 H₂O

   ou

   H₂SiF₆.2H₂O + 6 NH₃ →6 NH₄F + SiO₂ ↓
- la deuxième étape du procédé: la précipitation de NH₄F avec du calcaire (CaCO₃):

   2 NH₄F + CaCO₃ →CaF₂ ↓+ CO₂ ↑+ 2 NH₃↑+ H₂O

Le procédé de la présente invention permet d'utiliser l'acide fluosilicique brut d'une concentration élevée, par exemple ayant une concentration entre 5 et 40% en poids pour la production du fluorure de calcium synthétique et de la silice active (SiO₂) de qualité supérieure.

Le fluorure de calcium produit est parfaitement adapté à la production de fluorure d'hydrogène selon des procédés classiques.

En même temps, la silice active est produite dans un tel degré de qualité qu'elle peut être ajoutée dans la fabrication de l'acide phosphorique pour ajuster le déficit en silice active dans la roche phosphatée, aussi parce qu'elle possède d'excellentes propriétés, elle peut être utilisée pour la production de résines synthétiques, caoutchouc, peintures et papier.

Ce nouveau procédé permet d'éviter les inconvénients des procédés précédemment connus, en particulier dans le sens où il utilise la voie d'ammoniac (NH₃ ou NH₄OH) pour la neutralisation de l'acide fluosilicique pour avoir une excellente précipitation et séparation de sol de silice.

La solution liquide obtenue est le fluorure d'ammonium (NH₄F) qui peut facilement précipiter en ajoutant un calcaire à haute teneur (CaCO₃).

Les principaux avantages sont:
- Le procédé peut être alimenté par différentes qualités d'acide fluosilicique.
- Le procédé peut être alimenté par l'une des deux formes d'ammoniac (liquide ou gaz).
- Le processus a une grande efficacité.
- La séparation de la silice active est bonne.
- Une haute qualité de silice active est obtenue.
- La séparation du fluorure de calcium est bonne.
- Le fluorure de calcium de haute qualité est obtenue.
- La taille des grains de fluorure de calcium est acceptable compte tenu des exigences des procédés classiques pour la production de fluorure d'hydrogène.

La figure 1 illustre un schéma pour la mise en oeuvre du procédé selon l'invention. La première étape du procédé comprend la production de la silice active par réaction d'une solution aqueuse d'acide fluosilicique (FSA), à une concentration de 5 à 40% en poids, avec une solution basique d'hydroxyde d'ammonium contenant de 10 à 35% en poids sous forme de NH₃, ou d'ammoniac NH₃ liquide. Le mélange de réaction est conduit dans un réacteur 1 sous des conditions spécifiques telles qu'une bonne agitation, une température favorable entre 20° et 90°C, un pH allant de 5 à 11 et un de temps de séjour de 15 à 360 min. Le pH est avantageusement choisi de manière à permettre la précipitation de tout l'acide fluosilicique en une silice précipitée amorphe. Le temps de séjour influe sur la morphologie de la silice précipitée amorphe. La bouillie obtenue est ensuite séparé par filtration dans le filtre 2 en utilisant un filtre à vide avec une taille de pore de 100 µm ou plus préférablement en utilisant le presse-filtre, et la silice active (dioxyde de silicium) est lavée et séchée à 110°C. La silice active a une teneur élevée en dioxyde de silicium allant entre 50 et 90 en poids, et se compose de particules ayant un diamètre moyen de 32 µm avec 67,5% en volume inférieure à 40 µm et une surface spécifique mesurée par le laser granulométrie de 112m²/g.

Le lavage du gâteau est une solution diluée de fluorure d'ammonium qui est recyclée vers le réacteur 1 agité d'acide fluosilicique ou le réacteur 3 et le filtrat, qui est une solution de le fluorure d'ammonium est envoyé à la deuxième étape du procédé dans lequel le fluorure d'ammonium est en réaction avec du calcaire comme source de calcium pour produire du fluorure de calcium à haute teneur répondant aux spécifications des spaths fluor commerciaux.

La précipitation du fluorure d'ammonium est effectuée dans un réacteur 3 agité dans lequel une suspension de carbonate de calcium à une concentration entre 10 et 80% en poids est ajoutée. La température varie entre 60° et 90°C, le pH est de 6 à 12 et le temps de séjour est d'environ 30 à 60 minutes. Le pH et le temps de séjour sont avantageusement sélectionnés pour permettre la précipitation de la totalité du NH₄F en CaF₂ qui a de bonnes propriétés cristallines. La quantité nécessaire de carbonate de calcium est choisie pour répondre à un rapport pondéral Ca/F supérieur à 0,5 dans le mélange réactionnel. Pour améliorer la cristallisation du fluorure de calcium, une quantité allant de 10 à 70% de la bouillie de fluorure de calcium est renvoyée dans le réacteur 3, le reste de la bouillie de fluorure de calcium est séparé par filtration dans le filtre 4 pour récupérer le fluorure de calcium, qui est lavé et séché dans le séchoir 5.

La pureté du fluorure de calcium dépend de la pureté de la source de calcium. Il peut atteindre plus de 97% de CaF₂ en poids lorsque le carbonate de calcium - qui a une grande pureté - est utilisé. La teneur en dioxyde de silicium est inférieure à 1,5% en poids en raison de la bonne séparation du dioxyde de silicium dans la première étape du procédé. En ce qui concerne les particules de fluorure de calcium, le diamètre moyen est d'environ 20 µm à 87% en volume inférieure à 40 µm et la zone spécifique est de 278m²/g, les particules de diamètre beaucoup plus élevé seront obtenues en ajustant la boue de fluorure de calcium de recyclage ou le cas échéant à l'aide de décantation avant la filtration du fluorure de calcium. En outre, une granulation des particules peut être effectuée après séchage.

Après la filtration de la boue de fluorure de calcium, aussi bien le filtrat et que la solution de lavage du gâteau de filtration, qui sont des solutions de carbonate d'ammonium diluées, sont recueillis dans un réservoir 6 et traités par distillation et condensation pour obtenir une solution d'ammoniac. Ledit ammoniac est réutilisé tel quel ou en tant que solution de - carbonate d'ammonium allant de 10 à 30% de NH₃ par poids, pour l'alimentation de la neutralisation de l'acide fluosilicique.

En comparaison avec les procédés connus, la production de fluorure de calcium à partir de l'acide fluosilicique utilisant la voie d'ammoniac selon l'invention représente un nouveau procédé en ce sens qu'il utilise pour la première fois, le carbonate de calcium et l'ammoniac pour convertir l'acide fluosilicique en fluorure de calcium à un coût compétitif en améliorant l'efficacité des réactions et l'adoption d'une stratégie forte pour le recyclage d'ammoniac, le fluorure de calcium obtenu est répond aux spécifications des spaths fluor commerciaux, en raison de son haut degré de pureté et sa bonne granulométrie.

En outre, la silice active (dioxyde de silicium), également appelée silice précipitée amorphe est facilement séparée avant la précipitation et la séparation du fluorure de calcium.

Pour rendre le procédé plus économique et durable, la majeure partie de l'ammoniac est dégagée à partir du réacteur 3 de fluorure de calcium en raison de la décomposition partielle du carbonate d'ammonium sous les conditions du réacteur, puis lavée et renvoyée au réacteur de silice, les deux solutions de carbonate d'ammonium obtenues dans l'étape (b) en tant que filtrat et lavage de gâteau de filtration sont ensuite recueillies et traitées par distillation et condensation afin de récupérer l'ammoniac liquide qui est recyclé vers le réacteur 1 de silice.

La description qui précède et les exemples suivants se rapportent à plusieurs modes de réalisation spécifiques du procédé, et il est bien entendu que cette description est destinée à être uniquement illustrative et n'est en aucun cas limitative. Elle ne vise pas à exclure d'autres modes de réalisation possibles qui permettent de réaliser la réaction de la production de fluorure de calcium de haute qualité à partir d'acide fluosilicique utilisant la voie d'ammoniac.

### Exemple 1 (non couvert par les revendications)

252 grammes de solution d'acide fluosilicique ayant une concentration de 32% en poids, qui est un acide fluosilicique commercial, ont été introduits dans un réacteur agité de 1 litre. La solution dans le récipient de réaction a été agitée à une vitesse de 250 tours par minute. Au cours de l'agitation, 380 grammes d'une solution d'hydroxyde d'ammonium ayant une concentration de 25% (en poids) sous forme de NH₃ ont été injectés juste en dessous de la surface du liquide. Le temps de séjour du mélange réactionnel était d'environ 60 minutes et le pH final était d'environ 8,3 tandis que la température a baissé de 61° à 28°C. Le mélange réactionnel a ensuite été filtré, le gâteau de filtration résultant lavé avec de l'eau distillée et séché à 110°C. Dans ces conditions, le rendement de neutralisation du fluor était de 81,24%. 30 L'analyse chimique et la diffraction des rayons X du gâteau séché ont montré la production de fluosilicate d'ammonium et non la silice active.

### Exemple 1bis

Dans les mêmes conditions que l'exemple 1, 350 g d'une solution d'acide fluosilicique ayant une concentration de 23% en poids, qui a été préparée par dilution de l'acide fluosilicique commercial ayant 32% (en poids). Au cours de l'agitation, 507 g d'une solution d'hydroxyde d'ammonium ayant une concentration de 25% (en poids) a été utilisée comme NH₃. Le pH final du mélange réactionnel est d'environ 9,4. Dans ces conditions, il n'y avait pas de formation de silicofluorure mais seulement de la silice active, le rendement de la
neutralisation du fluor était 97,88%. L'analyse chimique du gâteau séché a montré l'obtention de la silice active (SiO₂).

### Exemple 2 (non couvert par les revendications)

80 g de fluorure d'ammonium ayant une concentration de 8,47% en poids, récupérés à partir de l'étape de neutralisation de l'acide fluosilicique, ont été introduits dans un récipient de réaction muni d'un agitateur. On a agité la solution dans le récipient de réaction à une vitesse de 250 tours par minute. Au cours de l'agitation, 71,4 g d'une suspension (19,5% en poids) d'hydroxyde de calcium ayant une concentration de 74,16% en poids ont été ajoutés afin de réaliser un rapport en poids de NH₄F/CaO équivalent à 2.1. Le temps de séjour du mélange réactionnel était d'environ 30 minutes et le pH final était d'environ 10 tandis que la température est passée de 21° à 16°C. Le mélange réactionnel a ensuite été filtré, le gâteau de filtration résultant lavé avec de l'eau distillée et séché à 110°C. Dans ces conditions, le rendement de précipitation du fluor était de 87,62%. L'analyse chimique et la diffraction des rayons X du gâteau séché ont montré l'obtention de fluorure de calcium.

### Exemple comparatif A (non couvert par les revendications)

Dans des conditions identiques à tous égards, à celles de l'exemple 2, 96 g de fluorure d'ammonium ayant une concentration de 8,47% en poids ont été introduits dans un récipient à réaction muni d'un agitateur. Pendant l'agitation, 71,4 grammes d'une suspension (19,5% en poids) d'hydroxyde de calcium ayant une concentration de 74,16% en poids ont été ajoutés afin de réaliser un rapport en poids de NH₄F/CaO équivalent à 2,2. Le temps de séjour du mélange réactionnel était d'environ 30 minutes et le pH final était d'environ 9,8. Dans ces conditions, le rendement de précipitation de fluor était de 69,75%. L'analyse chimique et la diffraction des rayons X du gâteau séché ont montré l'obtention de fluorure de calcium.

### Exemple comparatif B (non couvert par les revendications)

Dans des conditions identiques à tous égards avec ceux de l'exemple 2, 100 grammes de fluorure d'ammonium ayant une concentration de 6,49% en poids ont été introduits dans un récipient à réaction muni d'un agitateur. Pendant l'agitation 50 grammes d'une suspension 35 (25% en poids) d'hydroxyde de calcium ayant une concentration de 94,76% en poids ont été ajoutés afin de réaliser un rapport,en poids de NH₄F/CaO équivalent à 2. Le temps de séjour du mélange réactionnel était d'environ 30 minutes et le pH final était d'environ 10,7. Dans ces conditions, le rendement de précipitation de fluor était de 96,66%. L'analyse chimique et la diffraction des rayons X du gâteau séché ont montré l'obtention de fluorure de calcium.

### Exemple 3 (non couvert par les revendications)

200 grammes de solution d'acide fluosilicique ayant une concentration de 23% en poids, qui ont été préparés par dilution de l'acide fluosilicique commercial ayant 32% en poids, ont été introduits dans un récipient réactionnel de 1 litre muni d'un agitateur. La solution contenue dans le récipient de réaction était agitée à raison de 250 tours par minute. Au cours de l'agitation, 308 grammes d'une solution d'hydroxyde d'ammonium ayant une concentration de 25% (en poids) sous forme de NH₃ ont été injectés juste en dessous de la surface du liquide. Le temps de séjour du mélange réactionnel était d'environ 60 minutes et le pH final était d'environ 9,6 tandis que la température est passée de 54° à 20°C. Le mélange réactionnel a ensuite été filtré, le gâteau de filtration résultant lavé avec de l'eau distillée et séché à 110°C. Dans ces conditions, le rendement de la neutralisation maximale du fluor était de 98,22% en fonction des paramètres de la morphologie de la silice et du processus de filtration. L'analyse chimique a montré l'obtention de la silice active qui a une teneur élevée en dioxyde de silicium allant de 50 et 90 en poids, en fonction de la technologie de filtration, et se compose de particules ayant un diamètre moyen de 30 µm avec 67% en volume inférieure à 40 µm et une surface spécifique mesurée par la granulométrie laser de 112 m2/g. Le lavage du gâteau qui est une solution diluée de fluorure d'ammonium de 76 grammes ayant une concentration de 6,79% (en poids), est recyclé dans le réacteur d'acide fluosilicique agité. La solution de fluorure d'ammonium filtrée de 286,6 grammes et ayant une teneur en fluor de 7,04% (en poids), est envoyée à la seconde étape du procédé pour réagir avec 86,7 g d'une suspension à 40% (en poids) d'hydroxyde de calcium ayant une concentration de 94,76% (en poids). A ce stade, le rapport molaire de NH₄F / CaO équivalent à 2. Le temps de séjour du mélange réactionnel était d'environ 60 minutes et le pH final est d'environ 10,7. Le mélange réactionnel a ensuite été divisé en deux parties: 60% a été renvoyée dans le réacteur de fluorure de calcium et 40% a été filtrée; le gâteau de filtration résultant a été lavé avec de l'eau distillée et séché à 110°C. Dans ces conditions, le rendement de précipitation du fluor était de 96,66%. L'analyse chimique et la diffractométrie au rayon X du gâteau séché a montré l'obtention de fluorure de calcium, qui répond aux critères des spaths fluor commerciaux. La pureté du fluorure de calcium CaF₂ est de 91%. La teneur en dioxyde de silicium est inférieure à 1,5%. En ce qui concerne les particules de fluorure de calcium, le diamètre moyen est d'environ 12 µm avec 87% en volume à moins de 40 µm, et la surface spécifique mesurée par granulométrie laser est de 276 m2/g, des diamètres de particules beaucoup plus grands été obtenus en ajustant le recyclage du fluorure de calcium en suspension ou si nécessaire à l'aide de décantation avant la filtration du fluorure de calcium. En outre, une granulation de particules peut être faite après le séchage.

### Exemple 4

400 grammes d'une solution d'acide fluosilicique ayant une concentration de 23% en poids, qui ont été préparés par dilution de l'acide fluosilicique commercial ayant 32% en poids, ont été introduits dans un récipient réactionnel de 1 litre muni d'un agitateur. La solution contenue dans le récipient de réaction était agitée à raison de 250 tours par minute. Au cours de l'agitation, une quantité stoechiométrique d'ammoniac était injectée dans le fond du réacteur de silice. Le temps de séjour du mélange réactionnel est d'environ 60 minutes et le pH final est d'environ 9,5 tandis que la température est passée de 85° à 45°C. Le mélange réactionnel a ensuite été filtré, le gâteau de filtration résultant lavé avec de l'eau distillée et séché à 110°C. Dans ces conditions, le rendement de neutralisation du fluor était de 81,69%. L'analyse chimique a montré l'obtention de silice 10 active qui a une teneur élevée en dioxyde de silicium allant de 80 à 90 en poids, en fonction de la technologie de filtration, et se compose de particules ayant un diamètre moyen de 36 jim avec 56% en volume inférieure à 40 ^im et une surface spécifique mesurée par granulométrie laser est de 200m²/g. Le lavage du gâteau qui est une solution diluée de fluorure d'ammoniaque de 159 grammes ayant 13,44% (en poids) de fluor, est recyclé dans le réacteur 15 agité d'acide fluosilicique. La solution filtrée du fluorure d'ammonium ayant 357 grammes et un atome de fluor teneur de 17,30% (en poids), sont envoyés à la deuxième étape du procédé pour réagir avec 410 g d'une suspension (40% en poids) de carbonate de calcium de haute qualité ayant une teneur en CaO de 55,55%. A ce stade, le rapport en poids de NH₄F/CaO est équivalent à 1,3. 20 Le temps de séjour du mélange réactionnel était d'environ 30 minutes et le pH final était d'environ 11,5. Le mélange réactionnel a été filtré; le gâteau de filtration résultant a été lavé avec de l'eau distillée et séché à 110°C. Dans ces conditions, le rendement de précipitation du fluor était de 96,70%. L'analyse chimique et la diffractométrie au rayon X du gâteau séché a montré l'obtention de fluorure de calcium, qui répond aux critères des spaths fluor commerciaux. La teneur en dioxyde de silicium est inférieure à 1%. En ce qui concerne les particules de fluorure de calcium, la granulométrie est d'environ 40% moins de 45 µm et 20% au-dessus de 150 µm, des diamètres de particules beaucoup plus élevées étant obtenus en ajustant la boue de recyclage du fluorure de calcium ou le cas échéant à l'aide de décantation avant la 30 filtration du fluorure de calcium. En plus, une granulation des particules peut être effectuée après le séchage.

### LES RÉFÉRENCES

Brevet américain No. 2,780,521
Brevet américain No. 2,780,523
Brevet américain 4,031,193
Brevet américain No. 3,271,107
Brevet américain 6,224,844
Brevet américain 4,915,705
Brevet chinois No 103073040

## Revendications

1. Procédé de préparation du fluorure de calcium synthétique (CaF2) (min 90% de CaF2 en poids) à partir d'acide fluosilicique, comprenant les étapes suivantes:
(a) la réaction de l'acide fluosilicique (H₂SiF₆) avec l'hydroxyde d'ammonium ou l'ammoniac dans un premier réacteur (1), de manière à obtenir une première suspension épaisse; le filtrage de ladite première suspension de manière à obtenir un filtrat contenant une solution de fluorure d'ammonium ;
(b) la précipitation de la solution de fluorure d'ammonium obtenue sous forme d'un filtrat à l'étape (a) avec du carbonate de calcium comme une forme sèche ou sous forme d'une suspension à une concentration allant de10 à 80% en poids dans un deuxième réacteur (3) de manière à produire une deuxième suspension contenant le fluorure de calcium et le carbonate d'ammonium; le filtrage de ladite deuxième suspension de manière à obtenir un gâteau de filtration contenant du fluorure de calcium et un filtrat contenant une solution de carbonate d'ammoniaque; le lavage et le séchage dudit gâteau de filtration afin d'obtenir du fluorure de calcium et un gâteau de filtration de lavage contenant une solution d'hydroxyde d'ammonium; dans lequel une partie de la deuxième suspension allant de 10 à 70% est recyclée vers le second réacteur (3) de manière à améliorer la cristallisation du fluorure de calcium;
(c) L'évolution de la majeure partie de l'ammoniac provenant du deuxième réacteur à l'étape (b) à cause de la décomposition partielle du carbonate d'ammonium sous des conditions de réacteur ensuite le lavage et le renvoi dudit ammoniac dans le premier réacteur et la collecte et le traitement par distillation et condensation des solutions de carbonate d'ammonium obtenues en tant que filtrat et gâteau de filtration de lavage dans l'étape (b) pour récupérer l'ammoniac liquide qui est recyclé vers le premier réacteur (1).

2. Procédé selon la revendication 1, dans lequel la filtration de la première suspension à l'étape (a) est effectuée de manière à obtenir avec le filtrat un gâteau de filtration contenant de la silice précipitée amorphe, et dans lequel ledit gâteau de silice est en outre lavé et séché.

3. Procédé selon l'une des revendications 1 à 2, dans lequel la concentration de l'acide fluosilicique utilisé à l'étape (a) est comprise entre 5 et 40% en poids.

4. Procédé selon l'une des revendications 1 à 3, dans lequel l'acide fluosilicique utilisé dans l'étape (a) est un sous-produit d'acidulation de phosphate de roche.

5. Procédé selon l'une des revendications 1 à 4, dans lequel les conditions de la réaction réalisée dans le premier réacteur (1) à l'étape (a) comprennent au moins un des éléments suivants:
- l'agitation du mélange ;
- une température comprise entre 20 et 90°C ;
- un pH allant de 5 à 11 ; et
- un temps de séjour compris entre 15 et 360 minutes.

6. Procédé selon l'une des revendications 1 à 5, dans lequel le lavage du gâteau de filtration obtenu à l'étape (a) contient une solution de fluorure d'ammonium qui est recyclée vers le premier réacteur (1) ou le second réacteur (3), et dans lequel le filtrat obtenu dans l'étape (a) est renvoyé dans le second réacteur (3).

7. Procédé selon l'une des revendications 1 à 6, dans lequel le pH de la précipitation du fluorure de calcium dans l'étape (b) se situe dans la plage de 6 à 12 et le rapport pondéral Ca/F est supérieur à 0.5.

8. Procédé selon l'une des revendications 1 à 7, dans lequel les conditions de réaction effectuée dans le second réacteur (3) dans l'étape (b) comprennent au moins un des éléments suivants:
- l'agitation du mélange;
- une température comprise entre 60 et 90°C; et
- un temps de séjour compris entre 30 et 60 minutes.

## Patentansprüche

1. Verfahren zum Zubereiten synthetischen Calciumfluorids (CaF2) (Min. 90 Gew.-% CaF2) ausgehend von Fluorkieselsäure, das die folgenden Schritte umfasst:
(a) das Reagieren der Fluorkieselsäure (H₂SiF₆) mit dem Ammoniumhydroxid oder Ammoniak in einem ersten Reaktor (1) derart, dass eine erste dicke Suspension erhalten wird; das Filtern der ersten Suspension derart, dass ein Filtrat erhalten wird, das eine Ammoniumfluoridlösung enthält;
(b) das Ausfällen der Ammoniumfluoridlösung, die in Form eines Filtrats bei dem Schritt (a) erhalten wird, mit Calciumcarbonat als eine trockene Form oder in Form einer Suspension mit einer Konzentration, die von 10 bis 80 Gew.-% reicht, in einem zweiten Reaktor (3) derart, dass eine zweite Suspension erzeugt wird, die das Calciumfluorid und das Ammoniumcarbonat enthält; das Filtern der zweiten Suspension derart, dass ein Filterkuchen erhalten wird, der Calciumfluorid enthält, und ein Filtrat, das eine Ammoniakcarbonatlösung enthält; das Waschen und das Trocknen des Filterkuchens, um Calciumfluorid und einen Waschfilterkuchen zu erhalten, der eine Ammoniumhydroxidlösung enthält; wobei ein Teil der zweiten Suspension, der von 10 bis 70 % reicht, zu dem zweiten Reaktor (3) derart zurückgeführt wird, dass die Kristallisation des Calciumfluorids verbessert wird;
(c) das Evoluieren des Großteils des Ammoniaks, das von dem zweiten Reaktor bei dem Schritt (b) stammt, aufgrund der teilweisen Zersetzung des Ammoniumcarbonats unter Reaktorbedingungen, anschließend das Waschen und das Zurückschicken des Ammoniaks in den ersten Reaktor, und das Sammeln und Behandeln durch Destillierung und Kondensation der Ammoniumcarbonatlösungen, die als Filtrat und Waschfilterkuchen bei dem Schritt (b) erhalten wurden, um flüssiges Ammoniak zurückzugewinnen, das zu dem ersten Reaktor (1) zurückgeführt wird.

2. Verfahren nach Anspruch 1, wobei das Filtern der ersten Suspension bei dem Schritt (a) derart ausgeführt wird, dass mit dem Filtrat ein Filterkuchen erhalten wird, der abgeschiedenes amorphes Siliziumdioxid enthält, und wobei der Siliziumoxidkuchen außerdem gewaschen und getrocknet wird.

3. Verfahren nach einem der Ansprüche 1 bis 2, wobei die Konzentration der Fluorkieselsäure, die bei dem Schritt (a) verwendet wird, zwischen 5 und 40 Gew.-% beträgt.

4. Verfahren nach einem der Ansprüche 1 bis 3, wobei die Fluorkieselsäure, die bei dem Schritt (a) verwendet wird, ein Säuerungsunterprodukt von Gesteinsphosphat ist.

5. Verfahren nach einem der Ansprüche 1 bis 4, wobei die Bedingungen der Reaktion, die in dem ersten Reaktor (1) bei dem Schritt (a) ausgeführt wird, mindestens eines der folgenden Elemente umfassen:
- Rühren des Gemischs;
- eine Temperatur zwischen 20 und 90 °C;
- einen pH, der von 5 bis 11 reicht; und
- eine Verweilzeit, die zwischen 15 und 360 Minuten liegt.

6. Verfahren nach einem der Ansprüche 1 bis 5, wobei das Waschen des Filterkuchens, der bei dem Schritt (a) erhalten wird, eine Ammoniumfluoridlösung enthält, die zu dem ersten Reaktor (1) oder dem zweiten Reaktor (3) zurückgeführt wird, und wobei das Filtrat, das bei dem Schritt (a) erhalten wird, in den zweiten Reaktor (3) zurückgeschickt wird.

7. Verfahren nach einem der Ansprüche 1 bis 6, wobei der pH des Ausfällens des Calciumfluorids bei dem Schritt (b) in dem Bereich von 6 bis 12 liegt, und das Gewichtsverhältnis Ca/F größer ist als 0,5.

8. Verfahren nach einem der Ansprüche 1 bis 7, wobei die Bedingungen der Reaktion, die in dem zweiten Reaktor (3) bei dem Schritt (b) ausgeführt wird, mindestens eines der folgenden Elemente umfassen:
- Rühren des Gemischs;
- eine Temperatur zwischen 60 und 90 °C; und
- eine Verweilzeit zwischen 30 und 60 Minuten.

## Claims

1. Process for preparing synthetic calcium fluoride (CaF2) (min 90% CaF2 by weight) from fluosilicic acid, comprising the following steps:
(a) reacting fluosilicic acid (H₂SiF₆) with ammonium hydroxide or ammonia in a first reactor (1), so as to obtain a first slurry; filtering said first slurry so as to obtain a filtrate containing a solution of ammonium fluoride;
(b) precipitating the solution of ammonium fluoride obtained as a filtrate in step (a) with calcium carbonate as a dry form or as a suspension at a concentration ranging from 10 to 80% by weight in a second reactor (3) so as to produce a second slurry containing calcium fluoride and ammonium carbonate; filtering said second slurry so as to obtain a filter cake containing calcium fluoride and a filtrate containing a solution of ammonium carbonate; washing and drying said filter cake so as to obtain calcium fluoride and a washing filter cake containing a solution of ammonium carbonate; wherein a portion of the second slurry ranging from 10 to 70% is recycled to the second reactor (3) so as to enhance calcium fluoride crystallisation;
(c) evolving the major part of ammonia from the second reactor (3) in step (b) because of partial decomposition of ammonium carbonate under reactor conditions and then washing and returning said ammonia to the first reactor (1), and gathering and treating by distillation and condensation the ammonium carbonate solutions obtained as the filtrate and the washing filter cake in step (b) to recover liquid ammonia which is recycled to the first reactor (1).

2. Process according to claim 1, wherein the filtration of the first slurry in step (a) is performed so as to obtain with the filtrate a filter cake containing amorphous precipitated silica, and wherein said silica cake is further washed and dried.

3. Process according to one of claims 1 to 2, wherein the concentration of the fluosilicic acid used in step (a) is between 5 and 40% by weight.

4. Process according to one of claims 1 to 3, wherein the fluosilicic acid used in step (a) is a byproduct of rock phosphate acidulation.

5. Process according to one of claims 1 to 4, wherein the conditions of the reaction carried out in the first reactor (1) in step (a) comprise at least one of the following elements:
- stirring of the mixture;
- a temperature between 20 and 90°C;
- a pH ranging from 5 to 11; and
- a residence time between 15 and 360 minutes.

6. Process according to one of claims 1 to 5, wherein the filter cake washing obtained in step (a) contains a solution of ammonium fluoride which is recycled to the first reactor (1) or to the second reactor (3), and wherein the filtrate obtained in step (a) is sent to the second reactor (3).

7. Process according to one of claims 1 to 6, wherein the pH of calcium fluoride precipitation in step (b) is in the range of 6 to 12 and the weight ratio Ca/F is greater than 0.5.

8. Process according to one of claims 1 to 7, wherein the conditions of the reaction carried out in the second reactor (3) in step (b) comprise at least one of the following elements:
- stirring of the mixture;
- a temperature between 60 and 90°C;
- a residence time between 30 minutes and 60 minutes.
